# EUROPEAN PATENT APPLICATION

(11) **EP 3 512 260 A1**
(43) Date of publication of application: **17.07.2019**
(21) Application number: 18168463.0
(22) Date of filing: 20.04.2018
(51) Int. Cl.: H04W 48/18, H04W 48/20, H04W 48/12, H04W 64/00

(54) **METHOD AND APPARATUS FOR COMMUNICATION ON HIGH SPEED RAIL**

(30) Priority: 12.01.2018 US 201815870388
(71) Applicant: MediaTek Inc., Hsin-chu 300 (TW)
(72) Inventor: LIAO, Shih-Chieh, 812 Kaohsiung City (TW); LEE, Chi-Chen, 110 Taipei City (TW); WU, Meng-Hau, 300 Hsinchu City (TW); WONG, Sian-Jheng, 624 Yizhu Township, Chiayi County (TW); LIU, Han-Chiang, 300 Hsinchu City (TW); CHEN, Chun-Pin, 330 Taoyuan City, Taoyuan County (TW); CHEN, Yi-Hung, 800 Kaohsiung City (TW)
(74) Representative: Hoefer & Partner Patentanwälte mbB

(57) **Abstract**

Aspects of the disclosure provide an electronic device having a transceiver circuit and a processing circuit. The transceiver circuit is configured to transmit signals to and receive signals from wireless service provider networks. The processing circuit is configured to detect a signature of high speed rail (HSR), control the electronic device to enter a HSR mode when the signature is detected, and prioritize an HSR service provider network over one or more other wireless service provider networks when the electronic device is HSR eligible.

## Description

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

High speed rail operates significantly faster than traditional rail traffic. In an example, while traditional railway operates at an average of 60 miles per hour, the high speed rail can exceed 120 miles per hour. The high mobility of high speed rail challenges on-board mobile communication.

### SUMMARY

Aspects of the disclosure provide an electronic device having a transceiver circuit and a processing circuit. The transceiver circuit is configured to transmit signals to and receive signals from wireless service provider networks. The processing circuit is configured to detect a signature of high speed rail (HSR), control the electronic device to enter a HSR mode when the signature is detected, and prioritize an HSR service provider network over one or more other wireless service provider networks when the electronic device is HSR eligible.

According to an aspect of the disclosure, the processing circuit is configured to detect a mobility of the electronic device and determine that the signature of HSR is detected when the mobility of the electronic device matches mobility characteristics of high speed rail. In an example, the processing circuit is configured to detect the mobility of the electronic device based on at least one of a Doppler frequency shift, a cell change rate and satellite positioning information.

In an embodiment, the processing circuit is configured to extract a high speed rail indicator from wireless signals, and determine that the signature of HSR is detected. In an example, the processing circuit is configured to extract at least one of a high speed flag in a system information block, a mobility state, and a WiFi service set identifier.

In another embodiment, the processing circuit is configured to detect a position of the electronic device based on at least one of a satellite positioning information and neighboring cells information, and detect the signature of HSR based on the position.

In another embodiment, the processing circuit is configured to determine that the electronic device is HSR eligible when consecutive HSR cells are detected.

According to an aspect of the disclosure, the processing circuit is configured to prioritize the HSR service provider network over one or more other wireless service provider networks during at least one of a cell selection procedure, a cell reselection procedure, and a background frequency search procedure.

In an example, the electronic device includes a user interface circuit configured to receive a user input. The processing circuit is configured to detect the signature of HSR based on the user input.

Aspects of the disclosure provide a method of mobile communication by an electronic device. The method includes detecting, by a processing circuit in the electronic device, a signature of high speed rail (HSR), controlling the electronic device to enter a HSR mode when the signature is detected; and prioritizing an HSR service provider network over one or more other wireless service provider networks when the electronic device is HSR eligible.

Aspects of the disclosure provide a method for communication. The method includes broadcasting, by a base station of a high speed rail (HSR) service provider network, system information that is indicative of high speed rail service provider network, receiving an initial communication from an electronic device, verifying that the electronic device is eligible for using communication resources of the HSR service provider network and sending a dedicated priority dedicatedly to the electronic device to allow the electronic device to use the HSR service provider network as a dominant service provider network. In an example, the method includes sending the dedicated priority in a radio resource control release message to the electronic device.

### BRIEF DESCRIPTION OF THE DRAWINGS

Various embodiments of this disclosure that are proposed as examples will be described in detail with reference to the following figures, wherein like numerals reference like elements, and wherein:
Fig. 1A shows a block diagram of a communication system 100A according to an embodiment of the disclosure;
Fig. 1B shows a block diagram of a communication system 100B according to an embodiment of the disclosure;
Fig. 2 shows a plot 200 of a communication scenario according to an embodiment of the disclosure;
Fig. 3 shows a flow chart outlining a process 300 according to an embodiment of the disclosure;
Fig. 4 shows a flow chart outlining a process 400 according to an embodiment of the disclosure; and
Fig. 5 shows a plot of a state machine 500 according to an embodiment of the disclosure.

### DETAILED DESCRIPTION OF EMBODIMENTS

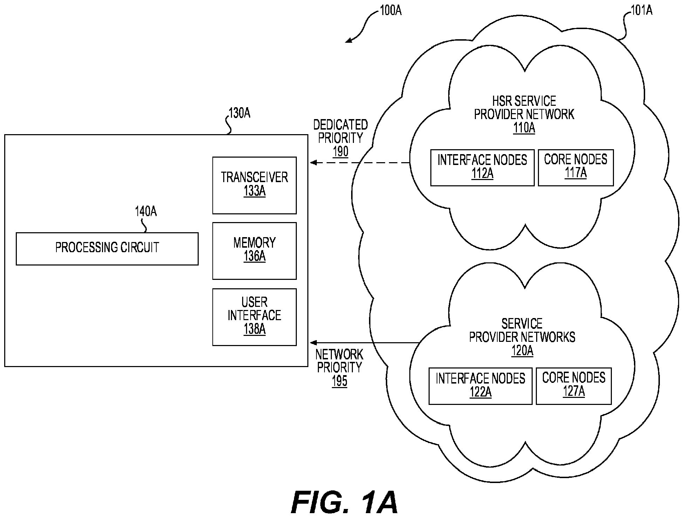

Fig. 1A shows a block diagram of a communication system 100A according to an embodiment of the disclosure. The communication system 100A includes one or more electronic devices 130A that receive wireless communication service from a network 101A. The network 101A includes multiple wireless telecommunication service providers, such as a high speed rail (HSR) service provider network 110A, and one or more other service provider networks 120A as shown in Fig. 1A. The HSR service provider network 110A is configured to provide wireless communication service coverage for high speed rail, such as along tracks of high speed rail, and the like that are within high speed rail authority scope. According to an aspect of the disclosure, the network 101A is configured to allow one or more HSR eligible devices to stay on the HSR service provider network 110A and prevent HSR ineligible devices to select/reselect the HSR service provider network 110A.

The network 101A includes interconnections that are implemented using any suitable network technology, such wired, wireless, a cellular communication technology, a local area network (LAN), a wireless LAN (WLAN), a fiber optical network, a wide area network (WAN), a peer-to-peer network, the Internet, and the like.

The HSR service provider network 110A and the one or more other service provider networks 120A can provide wireless telecommunication service using any suitable wireless communication technology, such as second generation (2G) mobile network technology, third generation (3G) mobile network technology, fourth generation (4G) mobile network technology, fifth generation (5G) mobile network technology, global system for mobile communication (GSM), long-term evolution (LTE), and the like. In an example, the HSR service provider network 110A is configured to provide wireless telecommunication service using technologies according to LTE standard, and the one or more other service provider networks 120A can provide wireless telecommunication service using 2G mobile network technology, 3G mobile network technology, and LTE.

In an example, a wireless telecommunication service provider in the network 101A is a facility-based provider that owns the mobile infrastructure, such as cell towers and network components that form a backbone to manage and control the services provided by the wireless telecommunication service provider. In another example, a wireless telecommunication service provider in the network 101A is a mobile virtual network operator that does not own a mobile infrastructure, but leases telephone and data service from facility-based providers.

In an embodiment, the multiple wireless telecommunication service providers respectively include a plurality of nodes that are coupled together by any suitable network technology, such as wired, wireless, fiber optical network, and the like. In the Fig. 1A example, the HSR service provider network 110A includes interface nodes 112A and core nodes 117A, and the service provider networks 120A include interface nodes 122A and core nodes 127A.

In an example, the interface nodes 122A, such as base transceiver stations (base stations), Node Bs, evolved Node Bs, and the like, include hardware components and software components configured to enable wireless communications between the interface nodes and electronic devices, such as the electronic device 130A, and the like that have subscribed services by the service provider networks 120A. Further, in the example, the core nodes 127A include hardware components and software components to form a backbone to manage and control the services provided by the service provider networks 120A.

In an example, the interface nodes 112A are evolved Node Bs that include hardware components and software components configured to enable wireless communications between the interface nodes and electronic devices, such as the electronic device 130A, and the like. In the example, cell towers for the interface nodes 112A are located along tracks of high speed rail, such that the cell towers provide radio coverage over the tracks. Further, in an example, the core nodes 117A include hardware components and software components to form a backbone to manage and control the service provided by the HSR service provider network 110A.

It is noted, in an example, a radio cover area unit by an interface node is referred to as a cell in a cellular network (e.g., the HSR service provider network 110A).

The electronic device 130A can be any suitable electronic device. In an example, the electronic device 130A is a terminal device (e.g., user equipment) used by an end-user for mobile telecommunication, such as a cell phone, a smart phone, a tablet computer, a laptop and the like. In an embodiment, the electronic device 130A belongs to a person who uses the electronic device 130A for communication via the network 101A. The person with the electronic device 130A can board on a train that runs on the tracks of the high speed rail.

According to an aspect of the disclosure, the network 101A is configured to provide resources for communication service of high speed rail, and is configured to enable proper usage of the resources by eligible electronic devices and avoid improper usage of the resources by ineligible electronic devices.

In an embodiment, the HSR service provider network 110A is specifically configured to provide communication service in the high mobility scenario, such as for the high speed rail. For example, the cell towers of the HSR service provider network 110A are built along tracks of high speed rail to provide coverage along the tracks. Further, in an example, the cell towers are suitably spaced and the radio characteristics (e.g., emitting powers, radio frequencies, antenna designs, etc.) of the cell towers are suitably configured according to high mobility of HSR to optimize wireless communication service for the high mobility scenario. Thus, in the example, the HSR service provider network 110A is specifically configured to provide communication service to persons, such as passengers, and the like who have boarded on trains that are running with relatively high speed, such as over 120 miles per hour, on the tracks of the high speed rail. The passengers can use electronic devices, such as the electronic device 130A, to perform communication, such as to receive a phone call, to place a phone call, to access Internet, and the like via the HSR service provider network 110A.

Further, the network 101A is configured to allow the HSR service provider network 110A to be the dominant communication service provider network for providing communication service for eligible electronic devices, and is configured to avoid usage of the HSR service provider network 110A by ineligible electronic devices. For example, when the electronic device 130A is an eligible device of HSR communication service, the electronic device 130A can stay with the HSR service provider network 110A as much as possible, and when the electronic device 130A temporarily uses the other service provider networks 120A, the electronic device 130A can return to the HSR service provider network 110A as soon as possible.

In an embodiment, the HSR service provider network 110A provides dedicated priority of communication resources to eligible electronic devices. In an example, when an electronic device, such as the electronic device 130A, camps on a cell of the HSR service provider network 110A, the electronic device 130A then initiates a procedure to establish radio resource control (RRC) connection with the HSR service provider network 110A. With the RRC connection, the HSR service provider network 110A can dedicatedly communicate with the electronic device 130A. Further, in an embodiment, the HSR service provider network 110A suitably checks whether the electronic device 130A is eligible for using the communication resources provided by the HSR service provider network 110A. In an example, the HSR service provider network 110A determines whether the electronic device 130A has high mobility. When the electronic device 130A has high mobility, the electronic device 130A is HSR eligible. It is noted that the HSR service provider network 110A can use other techniques to check whether the electronic device 130A is HSR eligible.

When the electronic device 130A is eligible for using the communication resources provided by the HSR service provider network 110A, the HSR service provider network 110A provides a dedicated priority of the communication resources (e.g., carrier frequencies used by interface nodes 112A of the HSR service provider network 110A) to the electronic device 130A. In an example, the HSR service provider network 110A provides the dedicated priority in an information element (e.g., idle mode mobility control information element) in a release message, such as a RRC connection release message, and sends the release message dedicatedly to the electronic device 130A. In addition, in an example, the HSR service provider network 110A also provides a value for setting a timer, such as a value for the timer T320, in the release message.

Generally, interface nodes of service provider networks, such as the interface nodes 122A of the other service provider networks 120A broadcast network priorities of communication resources in system information. In an example, a cell of a 4G network includes network priorities for carrier frequencies in system information block 5 (SIB5) for broadcasting; a cell of a 3G network includes network priorities for carrier frequencies in system information block 19 (SIB 19) for broadcasting; and a cell of a 2G network includes network priorities for carrier frequencies in a system information type 2quater message (e.g., SI2quater message) for broadcasting. In an embodiment, the broadcasted network priorities of communication resources do not include the communication resources (e.g., carrier frequencies) of the HSR service provider network 110A. In another embodiment, the broadcasted network priorities of communication resources include the communication resources (e.g., carrier frequencies) of the HSR service provider network 110A with low priorities (e.g., lowest priorities).

In the Fig. 1A example, the electronic device 130A can select/reselect a communication resource, such as carrier frequency, based on the received priorities of communication resources. The electronic device 130A includes a transceiver circuit 133A, a processing circuit 140A, memory 136A and user interface 138A. These components are coupled together, for example using a bus architecture (not shown).

The transceiver circuit 133A is configured to receive and transmit wireless signals. In an example, the transceiver circuit 133A includes a receiving circuit (not shown) and a transmitting circuit (not shown). The receiving circuit is configured to generate electrical signals in response to captured electromagnetic waves by an antenna (not shown), process the electrical signals to extract digital streams from the electrical signals. In an example, the transmitting circuit is configured to receive digital streams, such as management frames, data frames, and the like from for example the processing circuit 140A, generate radio frequency (RF) signals to carry the digital streams, and emit electromagnetic waves in the air via the antenna to transmit wireless signals that carry the digital streams.

The memory 136A is configured to store data and instructions. In an example, the memory 136A stores the received priority information of communication resources, and software instructions to be executed by a processor, such as the processing circuit 140A.

The user interface 138A includes software components and hardware components to enable information exchange between the electronic device 130A and a user of the electronic device 130A. In an example, the user interface 138A includes a touch screen (not shown). The electronic device 130A can provide information to the user by displaying texts and/or figures on the touch screen, and the user can input instructions to the electronic device 130A via the touch screen.

The processing circuit 140A includes suitable circuits to perform various baseband processing operations, such as voice signal processing, control operations for the electronic device 130A, execution of applications, and the like.

In an embodiment, when the electronic device 130A is HSR eligible device, the electronic device 130A receives dedicated priority information of carrier frequencies used by the HSR service provider network 110A in a message dedicated to the electronic device 130A, such as an RRC connection release message. In the embodiment, the dedicated priority of the carrier frequencies used by the HSR service provider network 110 is higher than priority of the carrier frequencies used by the service provider networks 120A, thus the electronic device 130A prioritizes the carrier frequencies used by the HSR service provider network 110A during reselection.

In an example, the electronic device 130A also receives a value for a timer T320 associated with the dedicated priority information in the message. The processing circuit 140A can set the timer T320 according to the value, and the start the timer T320. In an embodiment, before the timer T320 expires, the dedicated priority information is valid, and the electronic device 130A prioritizes the carrier frequencies used by the HSR service provider network 110A during reselection. In an example, at a time before the timer T320 expires, the electronic device 130A temporarily selects the service provider network 120A, and receives broadcasted network priorities of communication resources in system information from the service provider network 120A. In the example, the broadcasted network priorities do no overwrite the dedicated priority information, thus the electronic device 130A still prioritizes the carrier frequencies used by the HSR service provider network 110A during reselection, and can return to the HSR service provider network 110A during reselection when the HSR service provider network 110A becomes available, because the dedicated priority is higher than the broadcasted network priority in the system information from the service provider networks 120A.

In an embodiment, when the electronic device 130A is HSR ineligible device, the electronic device 130A receives broadcasted network priority information of communication resources in system information from the service provider network 120A. In the broadcasted network priority information, the carrier frequencies used by the HSR service provider network 110A have the lowest priority in an example. Thus, the electronic device 130A has less chance to reselect to the HSR service provider network 110A.

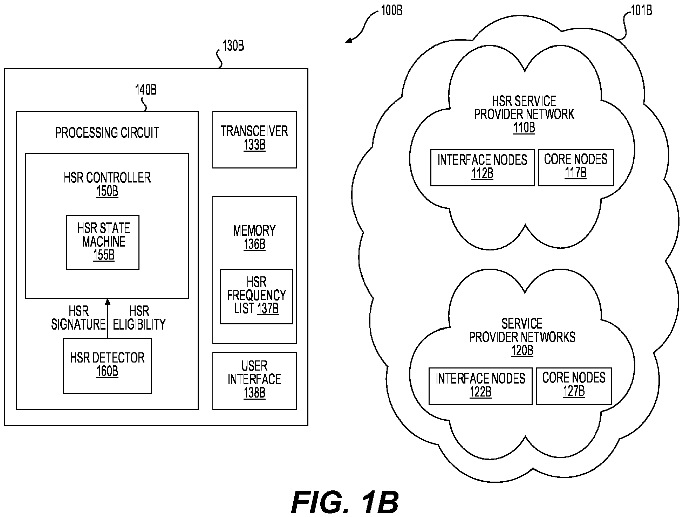

Fig. 1B shows a block diagram of a communication system 100B according to an embodiment of the disclosure. The communication system 100B includes one or more electronic devices 130B that receive wireless communication service from a network 101B. The network 101B includes multiple wireless telecommunication service providers, such as a high speed rail (HSR) service provider network 110B, and one or more other service provider networks 120B as shown in Fig. 1B. The HSR service provider network 110B is configured to provide wireless communication service coverage for high speed rail, such as along tracks of high speed rail, and the like that are within high speed rail authority scope.

According to an aspect of the disclosure, the electronic device 130B is configured to have an HSR mode, and can be triggered to enter the HSR mode. In the HSR mode, the electronic device 130B is configured to use the HSR service provider network 110B as the dominant service provider network over the one or more other service provider networks 120B.

The network 101B utilizes certain components that are identical or equivalent to those used in the network 101A; the description of these components has been provided above and will be omitted here for clarity purposes. However, in the Fig. 1B example, the HSR service provider network 110B may or may not provide dedicated priority information of communication resources used by the HSR service provider network 110B to eligible electronic devices. In the Fig. 1B example, regardless of the implementation of the HSR service provider network 110B, the electronic device 130B is configured to use, when the electronic device 130 is HSR eligible, the HSR service provider network 110B as the dominant service provider network over the one or more other service provider networks 120B.

The electronic device 130B can be any suitable electronic device. In an example, the electronic device 130B is a terminal device (e.g., user equipment) used by an end-user for mobile telecommunication, such as a cell phone, a smart phone, a tablet computer, a laptop and the like. In an embodiment, the electronic device 130B belongs to a person who uses the electronic device 130B for communication via the network 101B. The person with the electronic device 130B can board on a train that runs on the tracks of the high speed rail.

Specifically, in the Fig. 1B example, the electronic device 130B includes a transceiver circuit 133B, a processing circuit 140B, memory 136B and user interface 138B. These components are coupled together, for example using a bus architecture (not shown).

The transceiver circuit 133B is configured to receive and transmit wireless signals. In an example, the transceiver circuit 133B includes a receiving circuit (not shown) and a transmitting circuit (not shown). The receiving circuit is configured to generate electrical signals in response to captured electromagnetic waves by an antenna (not shown), process the electrical signals to extract digital streams from the electrical signals. In an example, the transmitting circuit is configured to receive digital streams, such as management frames, data frames, and the like from for example the processing circuit 140B, generate radio frequency (RF) signals to carry the digital streams, and emit electromagnetic waves in the air via the antenna to transmit wireless signals that carry the digital streams.

The memory 136B is configured to store data and instructions. In an example, the memory 136B stores software instructions to be executed by a processor, such as the processing circuit 140B. Further, in the example, the memory 136B stores a database of HSR frequencies, such as HSR frequency list 137B as shown in Fig. 1B. In an embodiment, the database of HSR frequencies is downloaded from a server. In another example, the electronic device 130B learns the HSR frequencies and stores the learned HSR frequencies in the database. In another example, the HSR service provider network 110B broadcasts system information that includes a HSR indicator using a HSR carrier frequency. For example, the system information block 2 (SIB2) includes a flag HighSpeedFlag. The HSR service provider network 110B can set the flag HighSpeedFlag in the SIB2 to be true (e.g., binary one) and broadcast SIB2 using a HSR carrier frequency. When the electronic device 130B detects that the flag HighSpeedFlag in a received SIB2 carried by a carrier frequency has true value (e.g., binary one), the electronic device 130B determines that the carrier frequency is an HSR frequency, and adds the carrier frequency in the database. It is noted that the database can include other suitable HSR information, such as identifications of HSR cells, locations of the HSR cells, and the like.

The user interface 138B includes software components and hardware components to enable information exchange between the electronic device 130B and a user of the electronic device 130B. In an example, the user interface 138B includes a touch screen (not shown). The electronic device 130B can provide information to the user by displaying texts and/or figures on the touch screen, and the user can input instructions to the electronic device 130B via the touch screen.

The processing circuit 140B includes suitable circuits to perform various baseband processing operations, such as voice signal processing, control operations for the electronic device 130B, execution of applications, and the like. In the Fig. 1B example, the processing circuit 140B includes a HSR controller 150B and a HSR detector 160B coupled together. In an example, the HSR controller 150B and the HSR detector 160B are respectively implemented using circuits. In another example, the HSR controller 150B and the HSR detector 160B are implemented as a processor executing software instructions.

In an embodiment, the HSR detector 160B is configured to detect an HSR signature, and provide the HSR signature to the HSR controller 150B to trigger the electronic device 130A to enter the HSR mode. The HSR detector 160B can receive various information from other components of the electronic device 130B, such as the transceiver 133B, the memory 136B, the user interface 138B, and detect the HSR signature based on the various information. In an example, the HSR detector 160B determines whether the received information matches HSR characteristics. When the received information matches the HSR characteristics, the HSR detector 160B detects the HSR signature.

In an example, the HSR service provider network 110B uses specific radio frequencies in wireless communication. The HSR detector 160B is configured to control the transceiver circuit 133B to monitor received radio frequencies. When a received radio frequency corresponds to one of the specific radio frequencies of the HSR service provider network 110B, the HSR detector 160B detects the HSR signature.

In another example, the HSR detector 160B is configured to control the transceiver circuit 133B to monitor received radio frequencies, and to calculate a frequency shift (e.g., Doppler shift) that is indicative of a relative speed between the electronic device 130B and a radio source (e.g., a cell tower). When the relative speed is within a speed range of HSR, the HSR detector 160B detects the HSR signature.

In another example, the network 101B, such as the HSR service provider network 110B, the service provider networks 120B and the like, monitors a number of cell changes (reselection) by the electronic device 130B in a time duration. Based on the number of cell changes, the network 101B determines the mobility information of the electronic device 130B, such as in a category of high mobility, medium mobility, or low mobility. The network 101B can transmit radio signals carrying a message that includes the determined mobility to the electronic device 130B. The transceiver circuit 133B receives the radio signal that carries the message. The HSR detector 160B extracts the mobility information that is determined by the network 101B. For example, when the mobility information is in the high mobility category, the HSR detector 160B detects the HSR signature.

In another example, the HSR detector 160B detects whether a HSR specific WiFi network is available. In an example, a WiFi network is installed and used on trains for high speed rail. In an example, the on board WiFi network includes "HSR" in an identification, such as WiFi service set identifier (SSID). When the HSR detector 160B detects "HSR" in the WiFi SSID, the HSR detector 160B detects the HSR signature.

In another example, the HSR detector 160B uses satellite positioning information to determine whether the electronic device 130B is on a train running on the tracks of high speed rail. In an example, the electronic device 130B includes a global positioning system (GPS) (not shown) configured to receive satellite positioning signals transmitted by a satellite system, and calculate position or speed of the electronic device 130B based on the satellite positioning signals. In an example, the HSR detector 160B determines whether the position of the electronic device 130B overlaps with tracks of high speed rail. When the calculated position of the electronic device 130B overlaps with the tracks of high speed rail, the HSR detector 160B detects the HSR signature. In another example, when the calculated speed of the electronic device 130B is in the speed range of high speed rail, the HSR detector 160B detects the HSR signature.

In another example, the HSR detector 160B uses a profile of neighboring cells to detect the HSR signature. In an example, the HSR detector 160B collects neighboring cells information from received radio signals, such as identifications of respective neighboring cells, received signal strength of respective neighboring cells, and the like. The HSR detector 160B forms a profile of neighboring cells. The profile is compared with pre-calibrated profiles in a database. In an example, the database includes pre-calibrated profiles of neighboring cells at locations along tracks of high speed rail. Based on the comparison, the HSR detector 160B can detect the HSR signature.

In another example, the HSR detector 160B monitors a number of cell changes (reselection) in a time duration. When the number of cell changes in the time duration is larger than a predefined threshold in an example, the HSR detector 160B detects the HSR signature.

In another example, the HSR service provider network 110B broadcasts system information that includes a HSR indicator. For example, the system information block 2 (SIB2) includes a flag HighSpeedFlag. The HSR service provider network 110B can set the flag HighSpeedFlag in the SIB2 to be true (e.g., binary one) and broadcast SIB2. When the HSR detector 160B detects that the flag HighSpeedFlag in a received SIB2 has true value (e.g., binary one), the HSR detector 160B detects the HSR signature.

Further, in an embodiment, the HSR detector 160B detects an HSR eligibility, and provides the HSR eligibility to the HSR controller 150B. In an example, when the HSR detector 160B detects consecutive HSR cells from received signals by the transceiver circuit 133B in a time duration, the HSR detector 160B determines that the electronic device 130B is on a train running on the tracks of high speed rail and is HSR eligible. It is noted that, in another embodiment, the HSR eligibility is determined using other suitable criteria.

It is noted that, in an embodiment, the HSR detector 160B can combine various information, and use the combined information to collectively detect the HSR signature, or determine the HSR eligibility of the electronic device 130B.

In an embodiment, the HSR detector 160B provides HSR signature to the HSR controller 150B to trigger the electronic device 130B to enter the HSR mode. In another embodiment, the HSR detector 160B provides a signal indicative of HSR eligibility to the HSR controller 150B.

The HSR controller 150B is configured to receive the HSR signature from the HSR detector 160B and control communication of the electronic device 130B in order to optimize communication under the HSR scenario. In an embodiment, the HSR controller 150B is configured to control the electronic device 130B to enter/exit a HSR mode based on the HSR signature.

In addition, in an embodiment, the HSR controller 150B is configured to allow the user of the electronic device 130B to get involved to confirm the HSR signature. In an example, when the HSR controller 150B receives the HSR signature, the HSR controller 150B can notify the user via the user interface 138B, and expect an instruction from the user via the user interface 138B to confirm the HSR signature. In an example, the HSR controller 150B can cause for example a touch screen to display suitable texts or figures to notify the user of the HSR signature. In another example, the HSR controller 150B can cause a vibration component (not shown) in the electronic device 130B to vibrate in order to alert the user of the notification on the touch screen.

In an example, the user can input an instruction via the user interface 138B to confirm or deny the HSR signature. The HSR controller 150B can receive the instruction and operate accordingly. For example, the HSR controller 150B receives an input that confirms the HSR signature, then the HSR controller 150B controls the electronic device 130B to enter the HSR mode; and when the HSR controller 150B receives an input that disapproves the HSR signature, the HSR controller 150B controls the electronic device 130B to disable the HSR mode.

In another example, when the HSR controller 150B does not receive any user instruction in a time duration, the HSR controller 150B controls the electronic device 130B to enter/exit the HSR mode based on information provided by the HSR detector 160B.

In the HSR mode, according to an aspect of the disclosure, the HSR controller 150B is configured to prioritize communication resources provided by the HSR service provider network 110B over other service provider networks 120B in suitable procedures, such as a cell selection procedure, a cell reselection procedure, a background frequency search procedure, and the like. In an embodiment, when the electronic device 130B performs a cell selection procedure, for example, at a time of power on (or in response to broken connection or exit of air mode), the electronic device 130B is configured to perform frequency scan according to the database of the HSR frequency. For example, the electronic device 130B scans the HSR frequencies before scanning non-HSR frequencies.

In another embodiment, the electronic device 130B camps on a current cell and performs a cell reselection procedure. The electronic device 130B receives reselection information from the network 101B, such as neighboring cells, and prioritizes HSR cells in the neighboring cells. In an example, when the current cell is non HSR cell, and the neighboring cells includes an HSR cell, the electronic device 130B selects the HSR cell to switch to and ignores reselection criteria, such as a priority criterion, a reselection offset criterion, a signal strength criterion, a reselection timer criterion, and the like. For example, when the current cell is non HSR cell, the neighboring cells includes an HSR cell, and the electronic device 130B is in the HSR mode, the electronic device 130 can reselect to the HSR cell regardless of any priority criterion. Generally, a reselection offset criterion can be used during reselection. The reselection offset criterion requires that a signal quality difference between for example a neighboring cell and the current serving cell is higher than a predefined offset. However, in an example, when the current cell is non HSR cell, the neighboring cell is an HSR cell, and the electronic device 130B is in the HSR mode, the electronic device 130 can reselect to the HSR cell regardless of any reselection offset criterion. In another example, a signal quality criterion is generally used during reselection. The signal quality criterion requires that the signal quality of a target cell is larger than a predefined threshold for reselection. However, in an example, when the current cell is non HSR cell, the target cell is an HSR cell, and the electronic device 130B is in the HSR mode, the electronic device 130 can reselect to the target cell regardless of the signal quality criterion. In another example, a reselection timer criterion is generally used during reselection. The reselection timer criterion requires that a timer for reselection is active (not expired). However, in an example, when the current cell is non HSR cell, the target cell is an HSR cell, and the electronic device 130B is in the HSR mode, the electronic device 130 can reselect to the target cell regardless of the reselection timer criterion. In another example, when the current cell is HSR cell, and none of the neighboring cells is HSR cell, the electronic device 130 can stay with the current cell regardless of the reselection criteria, for example regardless of higher signal strength by some neighboring cells.

In another embodiment, in the cell reselection procedure, the electronic device 130B receives reselection information from the network 101B at a location, such as neighboring cells and frequencies of neighboring cells, and the like. In an example, the frequencies of the neighboring cells are not HSR frequencies, and the database includes additional HSR frequencies to the frequencies of neighboring cells. The electronic device 130B can perform background frequency search of the additional HSR frequencies according to the database. In an example, the electronic device 130B scans the additional HSR frequencies and selects an HSR frequency with the best signal quality for example. Then, the electronic device 130B decodes signals at the selected HSR frequency, and determines an HSR cell that uses the selected HSR frequency. Further, the electronic device 130 can switch to the determined HSR cell, and ignore non-HSR cells in the reselection information.

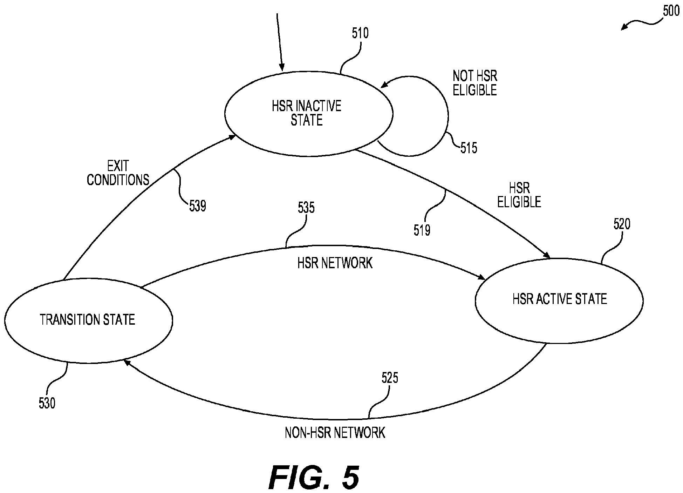

The HSR controller 150B can be implemented using any suitable technique. In an example, the HSR controller 150B is implemented using a finite state machine. An example of a finite state machine implementation is described with reference to Fig. 5.

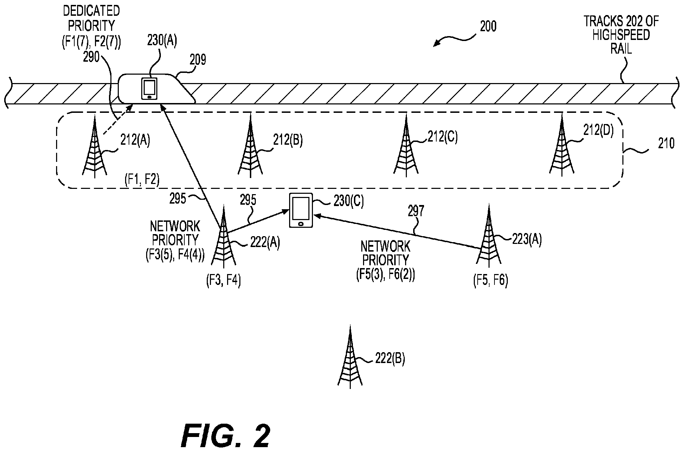

Fig. 2 shows a plot 200 of a communication scenario according to an embodiment of the disclosure. The plot 200 shows a first electronic device 230(A) and a second electronic device 230(C) that receive wireless communication service from a plurality of cell towers 212(A-D), 222(A-B) and 223(A). The cell towers 212(A-D) belong to a HSR service provider network 210, and are constructed along tracks 202 of high speed rail to provide wireless communication service coverage for high speed rail. The cell towers 212(A-D) are referred to as HSR cells in an example. The cell towers 222(A-B) and 223(A) belong to other service provider networks. For example, the cell towers 222(A-B) belong to a first service provider network that is a 4G network, and the cell tower 223(A) belongs to a second service provider network that is a 3G network. The cell towers 222(A-B) and 223(A) are referred to as non HSR cells in an example.

The HSR service provider network 210 operates similarly to the HSR service provider network 110A described above. The HSR service provider network 210 also utilizes components that are identical or equivalent to those used in the HSR service provider network 110A described above.

In the Fig. 2 example, the cell towers 212(A-D) of the HSR service provider network 210 are configured to use two carrier frequencies F1 and F2. The cell towers 222(A-B) of the first service provider network are configured to use two carrier frequencies F3 and F4. The cell tower 223(A) of the second service provider network is configured to use two carrier frequencies F5 and F6.

The first electronic device 230(A) and the second electronic device 230(C) operate similarly to the electronic device 130A. The first electronic device 230(A) and the second electronic device 230(C) also utilize components that are identical or equivalent to those used in the electronic device 130A.

In the Fig. 2 example, a train 209 is running on the tracks 202 of high speed rail. The first electronic device 230(A) is with a first user who has boarded on the train 209, and the first electronic device 230(A) is a HSR eligible device. The second electronic device 230(C) is a HSR ineligible device. For example, the second electronic device 230(C) is with a second user who is walking in a neighborhood that is nearby of the tracks 202.

In an example, the HSR service provider network 210 detects whether a device, such as the first electronic device 230(A), the second electronic device 230(C), and the like is an HSR eligible device or not. For example, the HSR service provider network 210 can determine a cell change rate for a device, and determine the HSR eligibility based on the cell change rate. In an example, the HSR service provider network 210 calculates a number of cell changes (reselection) by a device in a time duration. Based on the number of cell changes in the time duration, the HSR service provider network 210 determines the mobility information of the device. In an example, when the number of cell changes is higher than a threshold, the HSR service provider network 210 determines that the device is HSR eligible; otherwise, the HSR service provider network 210 determines that the device is HSR ineligible. In another example, the HSR service provider network 210 detects Doppler shift that is due to a movement of a device, and determines the HSR eligibility based on the Doppler shift.

In an example, the HSR service provider network 210 allows the first electronic device 230(A) to camp on the cell 212(A) and conduct an initial communication with the HSR service provider network 210 to establish radio resource control connection. With the radio resource control connection, the HSR service provider network 210 can dedicatedly communicate with the first electronic device 230(A), determine that the first electronic device 230 (A) is HSR eligible to use the HSR communication resource, and can provide the dedicated priority (e.g., 7 for frequency F1 and 7 for frequency F2 as shown by 290) in a message, such as a release message in response to a release of radio resource control connection. Further, in an example, the HSR service provider network 210 can provide a value for setting a timer T320 in the first electronic device 230(A). When the first electronic device 230(A) receives the dedicated priority for the frequencies F1 and F2, and the value for the timer T320, the first electronic device 230(A) stores the dedicated priority with the frequencies F1 and F2, sets the timer T320 of the value, and starts the timer T320.

The first electronic device 230(A) can also receive network priority from other service provider network, such as 5 for the frequency F3 and 4 for the frequency F4 as shown by 295. When the network priority includes the priority information for frequencies F1 and F2, the network priority does not override the dedicated priority received by the first electronic device 230(A) before the timer T320 expires.

When both the HSR service provider network 210 and other service provider networks are available to the first electronic device 230(A), because the dedicated priority is higher than the network priority, the first electronic device 230(A) selects cells of the HSR service provider network 210. When cells of the HSR service provider network 210 are not available, the first electronic device 230(A) can select cells of the other service provider networks. However, when a cell of the HSR service provider network 210 becomes available, the first electronic device 230(A) can select the cell of the HSR service provider network 210 during cell reselection.

In an example, the HSR service provider network 210 detects that the second electronic device 230(C) is HSR ineligible, and does not provide dedicated priority to the second electronic device 230(C). The second electronic device 230(C) receives the network priorities that are broadcasted by the other service provider networks. In an example, the network priority does not specify priorities for the frequencies F1 and F2. In another example, the network priority specifies lower priority values for the frequencies F1 and F2 than the other frequencies F3-F6. During cell reselection, when cells from both the HSR service provider network 210 and other service provider networks are available to the second electronic device 230(C), because the frequencies F1 and F2 have lower priority values than the other frequencies, the second electronic device 230(C) selects cells of the other service provider networks.

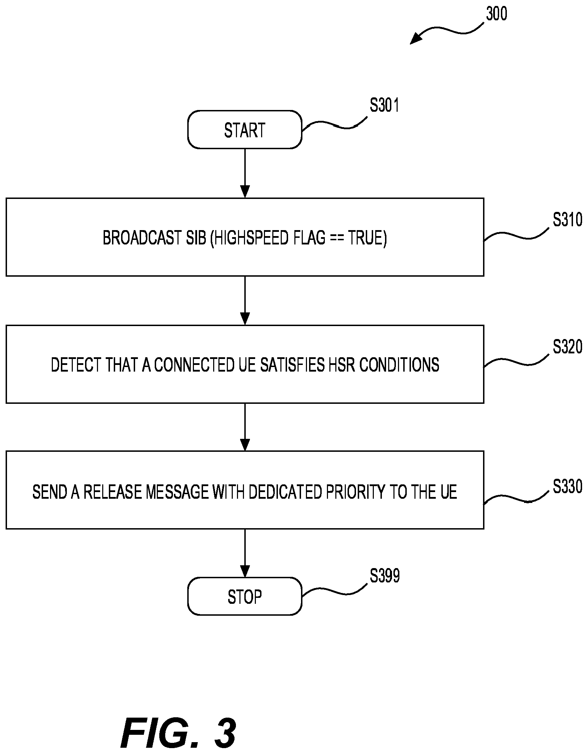

Fig. 3 shows a flow chart outlining a process 300 according to an embodiment of the disclosure. In an example, the process 300 is executed by for example, an interface node in a HSR service provider network, such as the interface nodes 112A in the Fig. 1A example, the cell towers 212 (A-D) in the Fig. 2 example, and the like. The process 300 starts at S301 and proceeds to S310.

At S310, the interface node broadcasts system information that is indicative of high speed rail. In an example, the HighSpeedFlag in the SIB2 is set to be true.

At S320, the interface node receives an initial communication from an electronic device. In the Fig. 2 example, the first electronic device 230(A) is on a high speed train, and the first electronic device 230(A) selects for example the cell 212 (A) of the HSR service provider network 210 to camp on and conduct an initial communication with the HSR service provider network 210 to establish radio resource control connection. The cell 212(A) receives the initial communication from the first electronic device 230(A).

At S330, the interface node sends dedicated priority to the HSR eligible electronic device. In the Fig. 2 example, the HSR service provider network 210 can determine that the first electronic device 230 (A) satisfies criteria (e.g., HSR eligibility) to use the HSR communication resource, and can provide the dedicated priority (e.g., 7 for frequency F1 and 7 for frequency F2) in a message, such as a release message to a release of radio resource control connection. Then the process proceeds to S399 and terminates.

It is noted that, in an embodiment, at S330, the interface node can detect that an electronic device, such as the second electronic device 230(C) does not satisfy the criteria to use the HSR communication resource and is ineligible device, and thus does not provide dedicated priority to the second electronic device 230(C).

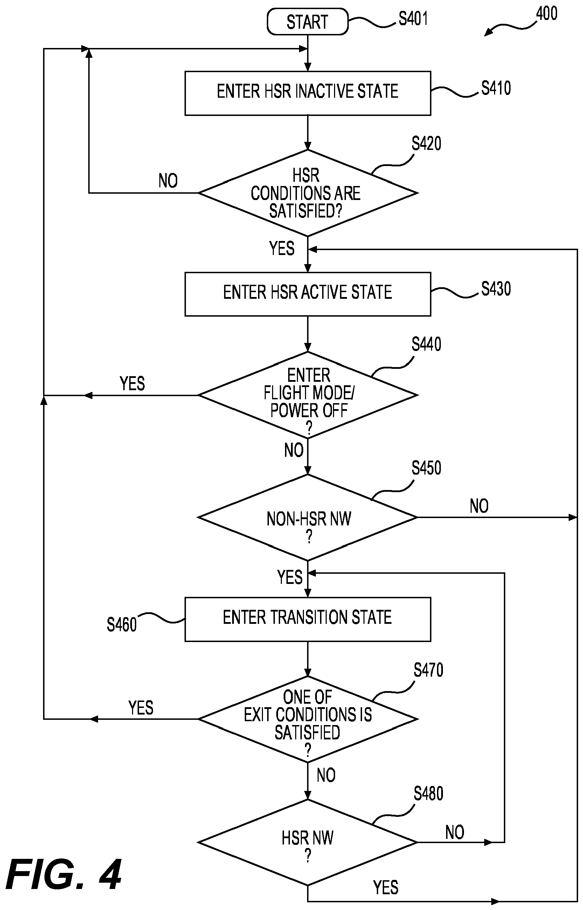

Fig. 4 shows a flow chart outlining a process 400 according to an embodiment of the disclosure. In an example, the process 400 is executed by for example, the electronic device 130B in the Fig. 1B example. The process 400 starts at S401, and proceeds to S410.

At S410, the electronic device enters an HSR inactive state. In an example, when the electronic device is powered on, the electronic device detects HSR signature. When the HSR signature is detected, the electronic device enters a HSR mode. When the electronic device enters the HSR mode, the electronic device enters an HSR inactive state first.

At S420, the electronic device determines whether HSR conditions are satisfied. In the Fig. 1B example, the HSR detector 160B detects whether the electronic device 130B is on a train that is running on the tracks of high speed rail. In an example, the electronic device 130B determines whether the electronic device passes a number of consecutive HSR serving cells in a time duration. When the HSR conditions are satisfied, the process proceeds to S430; otherwise, the process returns to S410 to stay in the HSR inactive state.

At S430, the electronic device enters the HSR active state. In the HSR active state, in an example, the electronic device prioritizes HSR cells over non HSR cells. In an example, the electronic device 130B is in the HSR active state. The electronic device 130 camps on an HSR cell and performs a cell reselection procedure. The electronic device 130B receives reselection information from the network 101B, such as neighboring cells, and prioritizes HSR cells in the neighboring cells. For example, when the neighboring cells includes another HSR cell with non-HSR cells, the electronic device 130B can selects the HSR cell to switch to and ignores the non-HSR cells. In another example, when none of the neighboring cells is HSR cell, the electronic device 130 can stay with the current cell regardless of higher signal strength by some neighboring cells.

In another embodiment, in the cell reselection procedure, the electronic device 130B receives reselection information from the network 101B at a location, such as neighboring cells and frequencies of neighboring cells, and the like. In an example, the frequencies of the neighboring cells are not HSR frequencies, and the database includes additional HSR frequencies to the frequencies of neighboring cells. The electronic device 130B can perform background frequency search of the additional HSR frequencies according to the database. In an example, the electronic device 130B scans the additional HSR frequencies and selects an HSR frequency with the best signal quality for example. Then, the electronic device 130B decodes signals at the selected HSR frequency, and determines an HSR cell that uses the selected HSR frequency. Further, the electronic device 130 can switch to the determined HSR cell, and ignore non-HSR cells in the reselection information.

At S440, the electronic device determines whether the electronic device enters or leaves a flight mode. When the electronic device enters or leaves a flight mode, the process returns to S410; otherwise, the electronic device proceeds to S450.

At S450, the electronic device determines whether the electronic device camps on cells that belong to non-HSR service provider network. In an example, when cells of the HSR service provider network 110B are not available, the electronic device 130(B) may select cells of, for example, the service provider networks 120B. When the electronic device camps on cells that belong to the non-HSR service provider network 120B, the process proceeds to S460; otherwise, the process returns to S430, and the electronic device remains in the HSR active state.

At S460, the electronic device enters a transition state (OUT-HSR state). In an example, the electronic device is allowed to stay in the transition state for a time duration. For example, a timer, such as a timer T, is started when the electronic device enters the transition state.

At S470, the electronic device determines whether one or more exit conditions are satisfied. In an example, when the owner of the electronic device is off the train with the electronic device, the electronic device satisfies the exit condition. In another example, when the timer T expires, the electronic device satisfies the exit condition. In another example, when the electronic device is controlled to enter a flight mode, or is powered off, the electronic device satisfies the exit condition. When one or more exit conditions are satisfied, the process returns to S410, and the electronic device enters the HSR inactive state; otherwise, the process proceeds to S480.

At S480, the electronic device determines whether the electronic device returns to the HSR service provider network. In the transition state, the electronic device prioritizes HSR cells over non-HSR cells during various procedures, such as selection procedure, reselection procedure, and background frequency search procedure to increase the chance to camp on HSR cells. When the electronic device camps on cells of the HSR service provider network, the electronic device returns to the HSR service provider network, and the process returns to S430 that the electronic device returns to the HSR active state; otherwise, the process returns to S460.

Fig. 5 shows a plot of a finite-state machine 500 according to an embodiment of the disclosure. In an example, the HSR controller 150B is implemented using the finite-state machine 500.

The finite-state machine 500 includes a HSR inactive state 510, a HSR active state 520 and a transition (OUT-HSR) state 530.

The HSR inactive state 510 is an initial state. For example, when the electronic device 130B is powered on, or when the flight mode is switched off, the HSR controller 150B controls the electronic device 130B to enter the HSR inactive state 510.

In the HSR inactive state, in an example, the electronic device 130B can detect HSR signature. When the HSR signature is detected, the electronic device 130B can detect whether the electronic device 130B is HSR eligible. In an example, the electronic device 130B determines whether the electronic device passes a number of consecutive HSR serving cells in a time duration. When the electronic device 130B is not eligible for HSR service, the HSR controller 150B controls the electronic device 130B to remain in the HSR inactive state as shown by 515. When the HSR detector 160B detects that the electronic device 130B satisfies the HSR conditions and is HSR eligible, the HSR controller 150B controls the electronic device 130B to change to the HSR active state 520.

In the HSR active state 520, HSR cells are prioritized over non HSR cells during cell reselection. In an example, the electronic device 130 is in the HSR active state 520, camps on an HSR cell and performs a cell reselection procedure. The electronic device 130B receives reselection information from the network 101B, such as neighboring cells, and prioritizes HSR cells in the neighboring cells. For example, when the neighboring cells includes another HSR cell and non-HSR cells, the electronic device 130B can select the HSR cell to switch to and ignore the non-HSR cells. In another example, when none of the neighboring cells is HSR cell, the electronic device 130 can stay with the current HSR cell regardless of higher signal strength by some neighboring cells.

In another embodiment, in the cell reselection procedure, the electronic device 130B receives reselection information from the network 101B at a location, such as neighboring cells and frequencies of neighboring cells, and the like. In an example, the frequencies of the neighboring cells are not HSR frequencies, and the database includes additional HSR frequencies to the frequencies of neighboring cells. The electronic device 130B can perform background frequency search of the additional HSR frequencies according to the database. In an example, the electronic device 130B scans the additional HSR frequencies and selects an HSR frequency with the best signal quality for example. Then, the electronic device 130B decodes signals at the selected HSR frequency, and determines an HSR cell that uses the selected HSR frequency. Further, the electronic device 130 can switch to the determined HSR cell, and ignore non-HSR cells in the reselection information.

However, in the HSR active state 520, when cells of the HSR service provider network 110B are not available, the electronic device 130B can select cells of the other service provider networks 120B. When the electronic device 130B camps on the cells of the other service provider network 120B, in the Fig. 5 example, the HSR controller 150B controls the electronic device to change to the transition state 530 as shown by 525.

According to an aspect of the disclosure, the electronic device 130B can stay in the transition state 530 for a maximum time duration. In an example, when the electronic device 130B enters the transition state 530, the timer T is started. In the transition state 530, the electronic device 130B prioritizes HSR cells over non-HSR cells during various procedures, such as the cell selection procedure, the cell reselection procedure, the background frequency search procedure described with regard to Fig. 1B to increase the chance to camp on HSR cells. Thus, when a cell of the HSR service provider network 110B becomes available, the electronic device 130B can select the cell of the HSR service provider network 110B to camp on and use for communication, then the HSR controller 150B controls the electronic device to return to the HSR state 520 as shown by 535.

In the transition state 530, when one or more exit conditions are satisfied, the HSR controller 150B controls the electronic device to return to the HSR inactive state as shown by 539. In an example, when the electronic device is detected to be off the train, the electronic device satisfies the exit condition. In another example, when the timer T expires, the electronic device satisfies the exit condition. In another example, when the electronic device is controlled to enter a flight mode, or is powered off, the electronic device satisfied the exit condition.

It is noted that when implemented in hardware, the hardware may comprise one or more of discrete components, an integrated circuit, an application-specific integrated circuit (ASIC), etc.

While aspects of the present disclosure have been described in conjunction with the specific embodiments thereof that are proposed as examples, alternatives, modifications, and variations to the examples may be made. Accordingly, embodiments as set forth herein are intended to be illustrative and not limiting. There are changes that may be made without departing from the scope of the claims set forth below.

## Claims

1. An electronic device, comprising:
transceiver circuit configured to transmit signals to and receive signals from one or more wireless service provider networks; and
a processing circuit configured to detect a signature of high speed rail (HSR), control the electronic device to enter a HSR mode when the signature is detected, and prioritize an HSR service provider network over one or more other wireless service provider networks when the electronic device is HSR eligible.

2. The electronic device of claim 1, wherein the processing circuit is configured to detect a mobility of the electronic device and determine that the signature of HSR is detected when the mobility of the electronic device matches mobility characteristics of high speed rail.

3. The electronic device of claim 2, wherein the processing circuit is configured to detect the mobility of the electronic device based on at least one of a Doppler frequency shift, a cell change rate and satellite positioning information.

4. The electronic device of claim 1, wherein the processing circuit is configured to extract a high speed rail indicator from wireless signals, and determine that the signature of HSR is detected.

5. The electronic device of claim 4, wherein the processing circuit is configured to extract at least one of a high speed flag in a system information block, a mobility state, and a WiFi service set identifier.

6. The electronic device of claim 1, wherein the processing circuit is configured to detect a position of the electronic device based on at least one of a satellite positioning information and neighboring cells information, and detect the signature of HSR based on the position.

7. The electronic device of claim 1, wherein the processing circuit is configured to determine that the electronic device is HSR eligible when consecutive HSR cells are detected.

8. The electronic device of claim 1, wherein the processing circuit is configured to prioritize the HSR service provider network over one or more other wireless service provider networks during at least one of a cell selection procedure, a cell reselection procedure, and a background frequency search procedure.

9. The electronic device of claim 1, wherein:
a user interface circuit configured to receive a user input; and
the processing circuit is configured to detect the signature of HSR based on the user input.

10. A method of mobile communication by an electronic device, comprising:
detecting, by a processing circuit in the electronic device, a signature of high speed rail (HSR);
controlling the electronic device to enter a HSR mode when the signature is detected; and
prioritizing an HSR service provider network over one or more other wireless service provider networks when the electronic device is HSR eligible.

11. The method of claim 10, wherein detecting, by the processing circuit in the electronic device, the signature of high speed rail (HSR) further comprises:
detecting a mobility of the electronic device; and
determining that the signature of HSR is detected when the mobility of the electronic device matches mobility characteristics of high speed rail.

12. The method of claim 11, wherein detecting the mobility of the electronic device further comprises:
detecting the mobility of the electronic device based on at least one of a Doppler frequency shift, a cell change rate and satellite positioning information.

13. The method of claim 10, wherein detecting, by the processing circuit in the electronic device, the signature of high speed rail (HSR) further comprises:
extracting a high speed rail indicator from wireless signals.

14. The method of claim 13, wherein extracting the high speed rail indicator from the wireless signals further comprises:
extracting at least one of a high speed flag in a system information block, a mobility state, and a WiFi service set identifier.

15. The method of claim 10, wherein detecting, by the processing circuit in the electronic device, the signature of high speed rail (HSR) further comprises:
detecting a position of the electronic device based on at least one of a satellite positioning information and neighboring cells information.
